# EUROPEAN PATENT SPECIFICATION

(11) **EP 2 577 371 B1**
(45) Date of publication and mention of the grant of the patent: **18.09.2019**
(21) Application number: 11749933.5
(22) Date of filing: 09.06.2011
(51) Int. Cl.: G02B 6/30, G02B 6/42, G02B 6/38

(54) **OPTICAL CIRCUIT BOARD WITH OPTICAL COUPLING DEVICE**
OPTISCHE LEITERPLATTE MIT OPTISCHER KOPPELVORRICHTUNG
PLAQUETTE OPTIQUE AVEC DISPOSITIF DE COUPLAGE OPTIQUE

(30) Priority: 07.06.2010 WO PCT/IB2010/001943
(43) Date of publication of application: 10.04.2013
(73) Proprietor: FCI Asia Pte. Ltd., Singapore 368328 (SG)
(72) Inventor: YABRE, Gnitabouré, F-28300 Mainvilliers (FR); STRICOT, Yves, F-78450 Villepreux (FR)
(74) Representative: Mader, Joachim
(86) International application number: PCT/IL2011/000456
(87) International publication number: WO 2011/154951

(56) References cited:
- WO-A1-2007/076888
- US-A- 5 424 573
- US-A1- 2004 033 016
- US-A1- 2004 184 738
- US-A1- 2005 117 833
- US-A1- 2006 023 990
- US-A1- 2006 078 248
- US-A1- 2006 215 963
- US-A1- 2007 160 330
- US-A1- 2007 267 569
- US-B1- 7 004 644
- US-B1- 7 421 160

## Description

### FIELD OF THE INVENTION

The instant invention relates to optical systems.

### BACKGROUND OF THE INVENTION

Most communication systems involve a number of system-cards. Such cards are usually manufactured as so-called printed circuit boards (PCBs). Usually, some of the system-cards, which are called daughter boards, are assembled together on a rigid and thicker PCB called the backplane or mother board.

The daughter boards usually extend parallel with each other and are interconnected together via the backplane, which extends perpendicular to them. There are several practical advantages to such a configuration: Easy insertion, removal, and replacement of the daughter-boards.

Because of the ever increasing requirements in data rates, due for example to the Internet, the limits of using electrical communications between the daughter-boards through the backplane are close to be reached. It becomes difficult to obtain good signal integrity over the electrical lines traced within the backplane.

To respond to this bandwidth demand, high speed systems are now being built with optical layers (optical fibres or planar waveguides) incorporated in replacement of the electrically-conducting metal. Indeed, light does not suffer from the same limitations as electricity. An optical layer is disposed parallel to the average plane of the backplane. An optical coupling device is used to interconnect this optical layer with the outside system-cards. Because light propagates in very thin layers (few microns thick), a high precision is required to align and to maintain aligned the optical coupling device with the optical layer of the circuit boards.

It is known to glue the optical coupling device to the optical board once this alignment is judged satisfactory.

However, gluing is not always satisfactory. Its reliability and life expectancy are not well known. In particular, this attachment might unexpectedly loosen, because the environmental conditions (mainly the temperature) at the backplane are demanding. To the contrary, it might be difficult to remove the glued optical coupling device, for example for repair.

US 2006/0078248 A1 discloses an optical system where the fixation and Z positioning of the optical coupling device is performed by gluing it to the optical interface

There is therefore a need to provide an alternative way of fixing an optical coupling device to an optical circuit board, which would still provide reliable optical connection.

### SUMMARY OF THE INVENTION

This need is met by an optical system according to claim 1.

It is provided a system comprising an optical circuit board and an optical coupling device.

The optical circuit board has a top face, a bottom face, opposed to the top face, and at least one optical layer, embedded between the top and bottom faces. The optical layer has a first optical interface.

At least one cut-out is formed in the top face. The optical circuit board has a reference layer defining an X-Y plane.

The optical coupling device has at least one positioning member extending in a said cut-out, and having a bottom face placed on the reference layer of the optical circuit board. The optical coupling device further defines at least one optical path adapted to transmit light between a first optical interface and a second interface. The first optical interface of the optical coupling device is optically coupled to the first optical interface of the optical board.

The system further comprises a mechanical fixation system attaching the optical circuit board to the optical coupling device. It comprises a fixation pin extending through the optical circuit board at the positioning member.

With these features, a reliable optical coupling is achieved.

In some embodiments, one might also use one or more of the features as defined in the dependent claims.

### BRIEF DESCRIPTION OF THE DRAWINGS

Other characteristics and advantages of the invention will readily appear from the following description of eight of its embodiments, provided as non-limitative examples, and of the accompanying drawings.

On the drawings :
- Figs. 1a, 1b are top perspective views of two examples of optical systems,
- Fig. 2 is a sectional view, taken along line II-II of Fig. 1a, of an optical system according to a first embodiment,
- Figs. 3-7 are views similar to Fig. 2 for other embodiments of the invention,
- Fig. 8 is a view similar to Fig. 2 for a seventh embodiment,
- Fig. 9 is a view similar to Fig. 2 for a eighth embodiment, and
- Fig. 10 is a partial enlargement of a variant of Fig. 2.

On the different Figures, the same reference signs designate like or similar elements.

### DETAILED DESCRIPTION

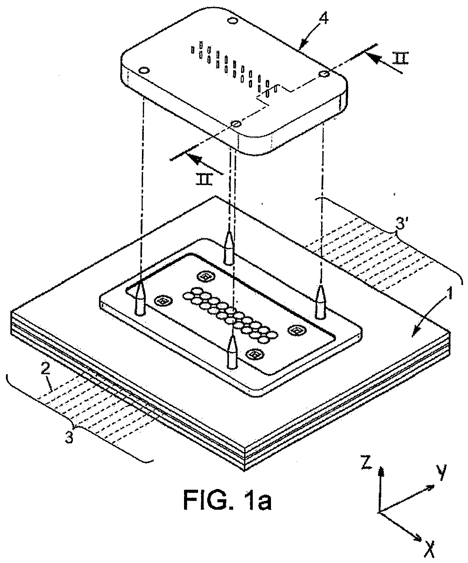

Fig. 1a partially shows a hybrid optical backplane or PCB 1, which is a layer stack comprising several layers. Hereinafter this backplane 1 will also be referred to as the layer stack 1. The layer stack 1 comprises a left-hand side waveguide structure 3, which comprises at least one optical waveguide 2 (10 optical waveguides per structure are shown). The PCB 1 further comprises a right-hand side waveguide structure 3', which is for example symmetrical to the left-hand side structure 3. The invention could also be applied to PCBs having only one waveguide structure. The waveguide 2 is positioned in a X-Y plane. The direction Y corresponds to the symmetry axis of the optical waveguide structures. The direction Z is defined normal to this X-Y plane. "Top", "bottom", "above" and "below" are used by reference to the relative position of an optical device 4 with respect to the PCB 1. The waveguide 2 or the waveguide structure 3 is integrated or embedded in at least one of the layers of the layer stack 1. Embedded waveguides 2 may be polymer waveguides, glass sheet waveguides or waveguides obtained by embedded fibre technology, or the like.

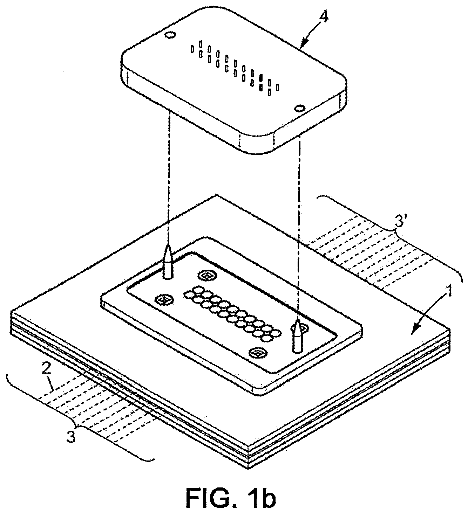

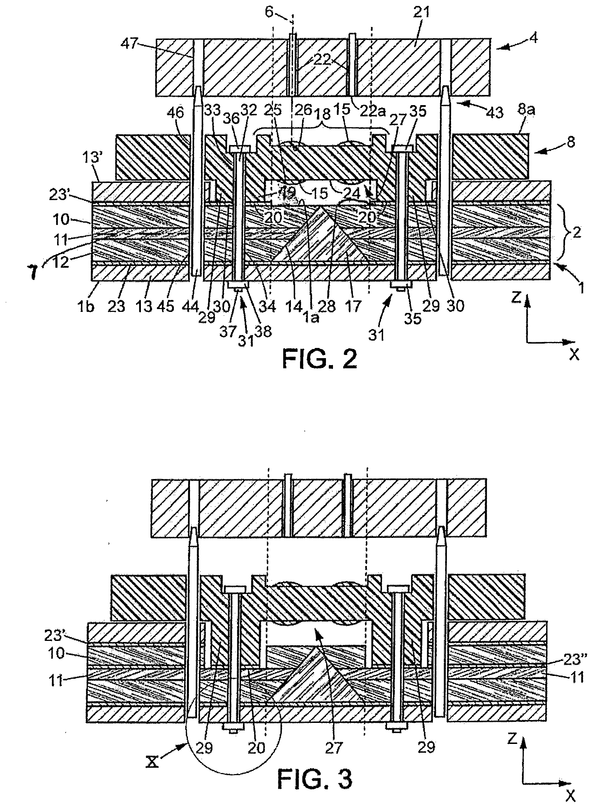

Optical signals, transferred to or from the mating optical device 4, such as an optical device or optoelectronic device or an other PCB, (not visible on Fig. 1, see Fig. 2), are provided over a first optical path 6 to the waveguide 2 of the layer stack 1, which waveguide 2 provides a second optical path 7 for the optical signal in the X-Y plane. In the present example, also shown on Fig. 1b, the optical device 4 comprises for example a mechanical transfer ferrule ("MT-ferrule"). On figure 2, the optical device comprises a housing (such as a high precision sleeve 21) in which ends of optical fibres 22 extend in precisely defined relative locations. Each fibre 22 comprises, at one end 22a directed toward the PCB, a first optical interface. At the other end (not shown), the optical fibres comprise another optical interface for interfacing to another optical transmission, emission or detection device.

In order to achieve an optimal optical coupling between the first and second optical paths, that are perpendicular to each other, a coupling device 8 is provided for alignment purposes.

In order to enable the optical signal to be deflected between the first optical path 6 parallel to the Z direction and the second optical path 7 parallel to the X direction, various approaches may be taken. This is one of these approaches which is schematically illustrated in Fig. 2. Although only a perpendicular deflection is illustrated, other deflection angles are possible as well.

The waveguide 2 comprises a top cladding layer 10, a waveguide core 11 and a bottom cladding layer 12. Layer stack 1 may comprise various other layers below and/or above the waveguide 2. Such a layer is e.g. an epoxy layer 13, deposited below the waveguide 2, or an epoxy layer 13' deposited above the waveguide 2. Additional reference layers 23, 23' may also be provided. Such reference layers are rigid layers the position of which with respect to the optical waveguide core layer 11 is very precisely known. This is known either from a well-controlled manufacturing process, or by later imaging (such as by detecting reference marks performed during the manufacturing process). For example, these reference layers are made of metal (copper). Moreover the layer stack 1 may comprise several waveguides 2 or waveguide structures 3 in the Z direction.

On Fig. 2, the deflection of optical signals between the first optical path 6 and the second perpendicular optical path 7 is achieved by employing a mirror mount 17, which is placed on the first and second optical paths. For example, the mirror mount 17 provides total reflection and comprises a continuous facet 14 angled at 45° with respect to the X direction, and extending parallel to the Y direction. The wording "mirror mount" 17 refers to any component able to deflect an optical signal and thus refers e.g. to a grating or a prism as well. The waveguide 2 is adapted to accommodate this mirror mount 17. If necessary the gap between the end of the waveguide 2 and the facet 14 through which the optical signal travels is filled with an index matching material. Alternatively, a reflective layer is provided on a facet of the waveguide structure 3.

In the present symmetric embodiment, the mirror mount 17 is also symmetrical with respect to the Y-Z plane.

Hence, the optical circuit board 1 comprises a first optical interface 1a corresponding to the points where light from the waveguide core 11 exits from the PCB 1 (in the present case after reflection on the facet 14).

The layer 23' is removed over the facet 14, so that light exits the PCB after reflection by the facet 14.

The optical circuit board 1 could also comprise a second optical interface, not visible on Fig. 2, through which the light running in the waveguide core 11 exits the circuit board. Then at this second optical interface, this light is emitted by a light emitting device, or is detected by a photo detector, or the like.

The use of one or more optical components 15 enhances or optimises the optical coupling between the first optical path 6 and the second optical path 7. For example, lenses or lens arrays are used to collimate diverging light beams thereby avoiding optical loss.

The optical connector assembly further comprises a coupling device 8. The coupling device 8 is, for example, a unitary piece manufactured by moulding a translucent suitable material. The optical coupling device 8 comprises a bottom face 24 defining a first optical interface 25 which is optically coupled with the interface 1a of the PCB. The coupling device 8 further comprises a second interface 26. An optical path is defined between the first and second interfaces 25, 26 of the coupling device 8. Namely, light entering the coupling device 8 at its first interface 25, coming from the interface 1a of the printed circuit board 1 is propagated through the coupling device 8 to the second interface 26. The second interface 26 is optically coupled to the interface 22a of the mating optical device 4.

An area 18 of the optical device contains the optical paths between the interfaces 25 and 26. It may be provided with optical components 15, such as a lens array, for optimising the optical coupling of the optical signals of the waveguides 2 to/from the ferrule 4 through the coupling device 8. The lens or lens array may form an integral part of the coupling device 8.

The coupling device 8 comprises X-Y-reference means (not shown) used for aligning the coupling device 8 in both the X-direction and the Y-direction with the waveguide structure 3. This alignment is performed so that the coupling device 8 is positioned in the X-Y plane and so that the first interface 25 of the coupling device 8 is directly above the interface 1a of the PCB. Further, the coupling device 8 comprises Z-reference means 19 to precisely define the height of the coupling device with respect to the optical layers of the PCB. The Z-reference means 19 cooperates with complementary Z-reference means 20 formed in a layer of the layer stack 1. In general, the z-reference means 20 is applied in such a layer at a predetermined height along the Z-axis relative to the waveguide structure 3 so that, when these Z-reference means 20 co-operates with the Z-reference means 19 of the coupling device 8, optimal optical coupling is achieved between the PCB and the coupling device 8. Preferably the Z-reference means 19 projects from the bottom face 24 of the optical coupling device 8.

Preferably the Z-reference means 20 are all located in the same layer of the layer stack 1. In this embodiment, this layer is the top face of the top layer 23' of the optical layer. It is advantageous to use such an internal layer of the PCB 1, since in that case the Z-reference means 20 can be applied simultaneously with or subsequently to one of the process steps for manufacturing the stack. These Z-reference means 20 can be accurately applied in the preferred layer by using laser ablation or photolithography. The Z-reference means 20 remains available for alignment if further layers complete the layer stack 1. This may be done by covering the Z-reference means 20 during subsequent manufacture steps and making them available after the layer stack 1 is completed.

Hence, a cut-out 27 is formed in the top surface of the printed circuit board 1. The cut-out 27 has a reference surface 28, formed as the bottom of the cut-out 27, at which the exact position along the axis Z with respect to the waveguide core layer 11 is known with sufficiently good precision. In the example of Fig. 2, this reference surface 28 is provided as the top face of the layer 23'.

The coupling device 8 comprises positioning members 29 having a bottom surface 30 which lays on the reference surface 28. For example, the positioning members 29 are provided as four feet of the optical coupling device 8 provided in corners of the optical coupling device (see Fig. 1). They project from the bottom face 24 of the optical coupling device 8. They could also be provided outside of the area 18.

A mechanical fixation system 31 is shown on Fig. 2. According to the example of Fig. 2, the mechanical fixation system 31 comprises a pin 32 extending through a through-hole 33 of the coupling device 8, through a through-hole 34 of the PCB. The pin 32 is provided as a separate part from the coupling device 8. The through-hole 33 is formed during the moulding process, or is drilled afterwards in the moulded coupling device. The through hole is formed in the PCB by any suitable method. The pin 32 extends through the positioning member 29 of the coupling device. For instance, the pins 32 are provided at a central area of the positioning member 29. In the example shown, a mechanical system 31 is provided at each of the positioning members 29, although this is illustrative only.

In particular, the pin 32 extends from the top face 8a of the coupling device 8 to the bottom face 1b of the PCB. In particular, the mechanical fixation system can comprise bearing surfaces 35 bearing respectively on the top surface 8a of the coupling device 8 and on the bottom surface 1b of the PCB. For example, the mechanical fixation system is releasable. For example, in the embodiment shown on Fig. 2, the pin 32 has an integrated head 36 which comprises a bearing surface 35 which bears on the top face 8a of the optical coupling device 8 and has an opposite end 37 on which a part 38 can be removably assembled. The part 38 comprises the bearing surface 35 bearing on the bottom face 1b of the PCB. For example, the pin 32 is a screw, and the part 38 is a bolt used for tightening on the bottom face of the PCB.

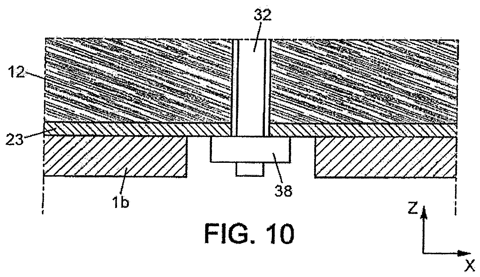

Alternatively, the bearing surface 35 is not applied to the bottom face of the PCB, but to any face suitable to provide such a fixation. Hence, the bearing surface 35 applied to the PCB could be applied to a bottom face of any suitable intervening layer, such as the reference layer 23, for example. A local cut-out in the bottom layer 1b could be provided to perform such a connection, as shown on the enlargement of Fig. 10.

According to a method of fixation, the pin 32 with its integrated head 36 is inserted from the top, first through the through-hole 33 of the optical coupling device 8, then through the through-hole 34 of the PCB until its end 37 projects below the bottom face 1b of the PCB, and the bolt 38 is assembled thereto.

According to another embodiment, a reverse mounting from the bottom face of the PCB is also possible, with bolting on the top face of the optical coupling device.

Attaching the optical coupling device 8 to the PCB 1 at the Z-reference means 19, 20 (reference surface 28 and positioning member 29) improves to a certain extent the precision of the Z-positioning. Further it enables not to affect the Z-position of the area 18 during fastening. In particular, no bending to the optical coupling device 8 is caused by this method. Such bending would be undesirable, since it would move the interfaces 25 and/or 26 out of their optimal Z-position. Further, the attachment is releasable, which is useful to replace the optical coupling device, if necessary.

A second embodiment of the invention is now disclosed with reference to Fig. 3. This embodiment corresponds to the embodiment of Fig. 2, with the difference that the Z-reference layer 20 of the PCB is defined as a reference layer 23" provided directly over the top surface of the waveguide core 11. The positioning members thus extend deeper into the cut-out 27 of the PCB. Using the top surface of the waveguide core 11 as a basis for the Z-reference layer, the positioning along the axis Z is optimal, because this positioning reduces the necessity to take into account the precision of the method of manufacturing the layer 10 between the core 11 and the coupling device 8.

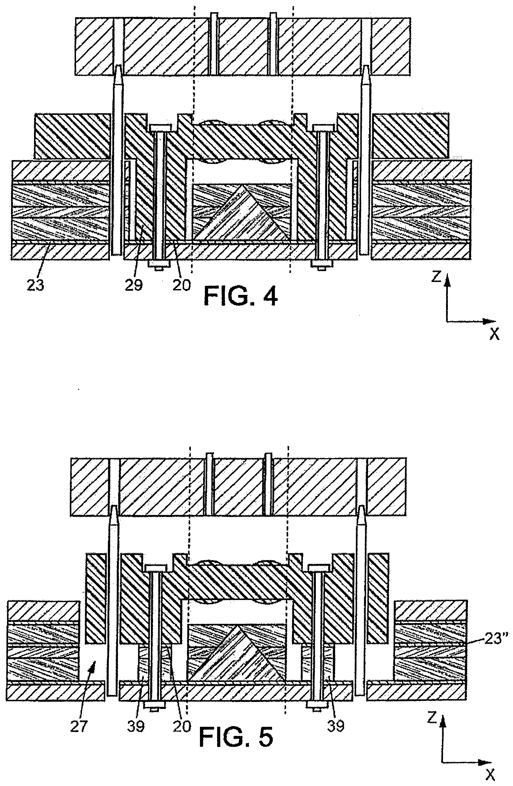

According to a third embodiment, shown on Fig. 4, the Z-reference 20 in the PCB is provided as the top face of the bottom layer 23 of the PCB. The positioning members 29 are provided longer than in the previous embodiments, to extend until their bottom face is placed on the reference layer.

Another benefit of this configuration is that, for example when the PCB comprises compressible material, such as a plastic layer forming the core and/or the cladding, compression of these layers could occur during the connection of the mating optical device 4 to the PCB 1, because too high a compression force is applied to perform this connection. If this compression is not 100 % recovered after mating, there is a risk of mis-alignment of the components along the Z-direction. The two above configurations enable to decrease the risk that such permanent compression causes a permanent mis-alignment.

According to yet another embodiment, shown on Fig. 5, the reference layer 20 is not necessarily provided as a bottom surface of a cut-out, but be provided as a top surface of a projection 39 from a cut-out 27 provided in the PCB. Alternatively, the projection 39 is provided as a separate object, distinct from the PCB, and precisely positioned therein.

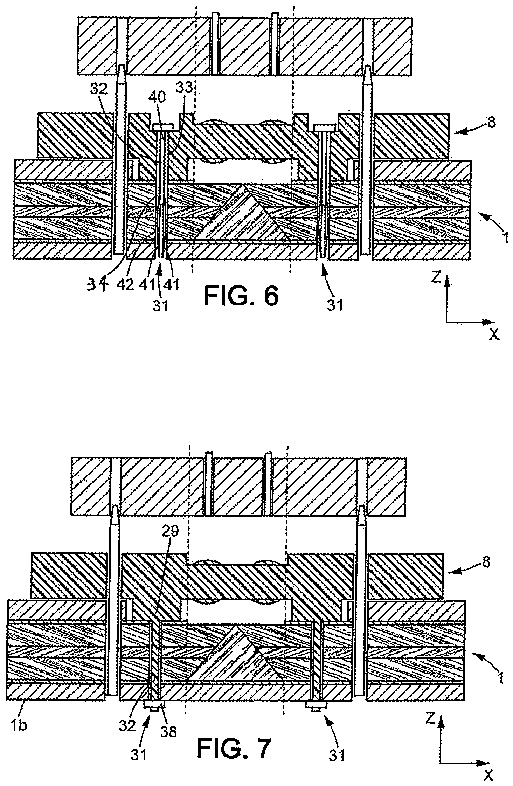

Fig. 6 now provides an alternative way for a mechanical fixation system 31. The various positions of the Z-reference means 19 and 20 as discussed above in relation to Figs. 3 to 5, could also apply to the embodiment of Fig. 6. According to Fig. 6, the mechanical fixation system 31 comprises a press-fit stud 40 extending through the holes 33 and 34. It differs from the mechanical fixation system of Fig. 2 in that the pin 32 comprises elastic members 41 which extend in the hole 34, and are biased by the cylindrical surface 42 of these through holes. A mechanical friction occurs between the external surface of the elastic members, and the internal surface 42 of the holes 34, to retain the coupling device 8 on the PCB 1. In this example, the holes 33 and 34 are not necessarily through holes.

A sixth embodiment is now described in relation to Fig. 7. This embodiment differs from the embodiment of Fig. 2 by the nature of the mechanical fixation system 31. Various embodiments may also be implemented with reference means as defined in Figs. 3 to 5. According to the present embodiment, the mechanical fixation system does not use a separate part as the pin 32, but the pin 32 is integrally formed with the optical coupling device 8. For example, the pins 32 are integrally moulded with the optical coupling device 8. The pins 32 are provided on the positioning member 29.

Fixation on the bottom face 1b of the PCB may be performed by any suitable means such that a separate part 38 brought on the bottom face of the PCB 1.

Turning back to Fig. 2, once the coupling device 8 has been fixed to the optical circuit board 1 as described above, it is necessary to align the optical device 4 to the optical coupling device 8 and the circuit board 1. In Fig. 2, the alignments of the optical device 4 to both parts are performed simultaneously, by using an alignment system 43, which in the present case, comprises pins 44 which extend along the Z direction both through holes 45 of the PCB and 46 of the optical coupling device 8, outside the area 18. The pins 44 thus project from the top surface 8a of the optical coupling device and cooperate with through holes or recesses 47 of the optical device 4. This is also shown in relation to Figs. 3 to 7.

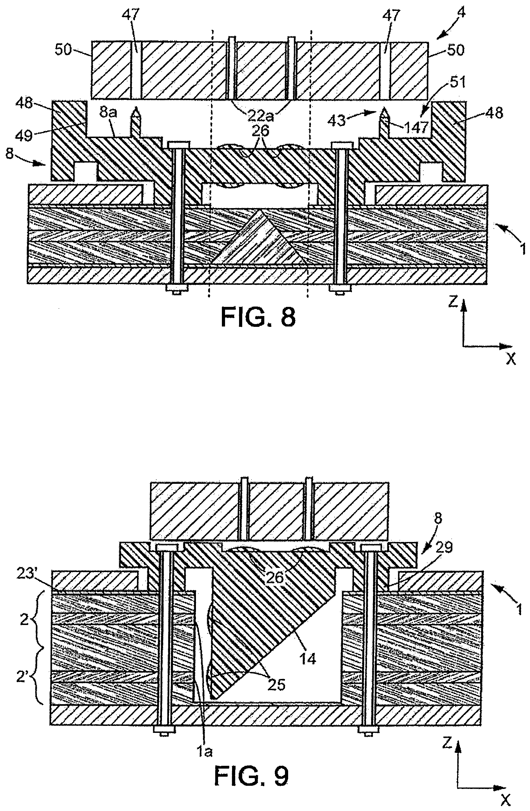

Fig. 8 now shows a seventh embodiment of the invention. Various embodiments may be conceived in combining one or more of the features described in relation to Figs. 2 to 7.

In the embodiment of Fig. 8, the optical coupling device 8 comprises pins 147 which project from the top face 8a of the optical coupling device. In particular, the pins 147 are integrally formed with the optical coupling device 8 being for example, integrally moulded therewith. The optical device 4 is identical to the one which has been previously described. Thus, the alignment of the optical device 4 in the X-Y plane, with respect to the coupling device 8 may be performed independently to the alignment in the X-Y plane of the optical coupling device 8 with respect to the PCB 1.

According to the embodiment of Fig. 8, the optical coupling device 8 further comprises a surrounding wall 48 which projects from the top face 8a of the optical coupling device, and is adapted to surround, at least partly, the optical device 4 during mating the optical device 4 along the direction Z toward the optical coupling device 8. In particular, the surrounding wall 48 comprises a face 49 facing radially inward, and dimensioned so as to guide an external complementary face 50 of the optical device 4 during mating of the optical device 4 to the PCB 1. In particular, the protection system 51 provided by the combination of the guiding surface 49 and guided surface 50 provides at least one of the following functions :
- To prevent tilting of the optical device 4 with respect to the mating axis, thus protecting from bending or even breaking one or more of the pins 47 (the wall 48 is more bend-resistant than the pins 47);
- To provide optical protection by isolation of the optical coupling between the second interface 26 of the optical coupling device 8 and the ends 22a of the optical fibres in a mated configuration, so as to prevent light from the outside to be transferred through the PCB, and/or
- To provide dust protection of these interfaces, so as to reduce the risk that opaque particles may enter the optical system and prevent light transfer between the optical device 4 and the coupling device 8.

These provisions may be also provided independently of the way the coupling device 8 is attached to the PCB 1.

An eighth embodiment is now described in relation to Fig. 9. Various embodiments may be conceived in combining one or more of the features described in relation to Figs. 2 to 8.

As shown on Fig. 9, the facet 14 is now provided integral with the optical coupling device 8. For example, it is integrally moulded therewith. The fixation of the optical coupling device 8 to the PCB 1 is as explained above with reference to any of Figs. 2 to 8. Hence, according to this embodiment, the optical interface 1a of the PCB is not provided as parallel to the top face of the PCB, but extends in the Y-Z plane. The interfaces 25 and 26 of the optical coupling device 8 are no longer parallel to one another, as on Fig. 2, but are now perpendicular to one another.

Another difference compared to the embodiment of Fig. 2 (although this could be provided independently from the first difference described above) is that the PCB here is provided with two parallel optical layers 2 and 2'. Hence, the system is not symmetrical with respect to the Y-Z plane.

It will be clear to the person skilled in the art that, although the description sometimes makes reference to light being transmitted from one location to another, this is for the sake of clarity of the description only, and that light could as well be propagated in the opposite direction depending of the kind of applications, apart from the cases where it is clear from the context that it is not possible.

## Claims

1. An optical system comprising:
an optical circuit board (1) having:
• a top face,
• a bottom face (1b;23), opposed to the top face,
• at least one optical layer (11), embedded between the top and bottom faces, and having a first optical interface (1a),
• at least one cut-out (27) formed in the top face, and having a bottom reference layer (20) defining an X-Y plane,
- an optical coupling device (8) having:
• at least one positioning member (19) extending in a said cut-out, and having a bottom face (30) placed on the reference layer of the optical circuit board,
• at least one optical path adapted to transmit light between a first optical interface (25), optically coupled to the first optical interface (1a) of the optical board, and a second interface (26),
- a mechanical fixation system (31) adapted to attach the optical coupling device to the optical circuit board, and comprising a fixation pin (32) extending through at least part of the optical circuit board (1) at the positioning member (19),
**characterized in that** the mechanical fixation system (31) comprises a bearing surface (35) bearing on at least a top face (8a) of the optical coupling device (8) or on any bottom face of the optical circuit board (1);
and
wherein the reference layer (20) is arranged at a predetermined height along the z-axis, and
wherein the positioning member (19) contacts the reference layer (20) at the predetermined height along the z-axis due to a fixation of the coupling device (8) to the optical circuit board (1) by the bearing surface (35) of the mechanical fixation system (31).

2. System according to claim 1, wherein the mechanical fixation system (31) is releasable.

3. System according to any of the preceding claims, wherein the positioning member (19) has a central area, and wherein the pin extends in the central area.

4. System according to any of the preceding claims, wherein the optical coupling device has a top face (8a), opposed to the bottom face, and wherein the pin (32) extends from the top face of the optical coupling device, to the bottom face (1b) of the optical circuit board (1).

5. System according to any of the preceding claims, wherein the mechanical fixation system (31) comprises a bearing surface (35) bearing on the top face (8a) of the optical coupling device, which is opposed to the bottom face (30) of the positioning member.

6. System according to any of the preceding claims, wherein the optical circuit board comprises a through hole (34) and wherein the pin (32) extends through the through hole of the optical circuit board.

7. System according to any of the preceding claims, wherein the optical coupling device comprises a through hole (33) extending from the bottom face of the positioning member to an opposed top face (8a) of the optical coupling device, and wherein the pin extends through the through hole (33) of the optical coupling device.

8. System according to any of the preceding claims, wherein the optical circuit board comprises a through hole having an internal cylindrical face (42), and wherein the pin (32) cooperates with the internal cylindrical face by friction.

9. System according to any of the preceding claims, wherein the pin (32) is integral with the optical coupling device.

10. The optical system according to claim 2, wherein the fixation pin (32) extends through the optical circuit board (1) at the positioning member (19).

11. System according to any of the preceding claims, further comprising:
- a MT-ferrule (4) having a first optical interface (22a),
- an alignment system (43) adapted to align the MT-ferrule (4) on the optical circuit board (1), so that the first optical interface (22a) of the MT-ferrule is optically coupled to the second optical interface (26) of the optical coupling device (8).

12. System according to claim 11, wherein the alignment system comprises at least one recess (47) in the MT-ferrule, and at least one respective pin (147), complementary with the recess and integrally formed with the optical coupling device (8).

13. System according to claim 12, wherein the MT- ferrule has a guided surface (50) extending along a mating axis perpendicular to the X-Y plane, and wherein the optical coupling device (8) has a bend-resistant system (48) having a guiding surface (49) complementary to the guided surface (50), and adapted to guide the MT-ferrule along the mating axis.

14. The optical system according to claim 10, further comprising:
- a MT-ferrule (4) having a first optical interface (22a), wherein
• the second interface (26) is optically coupled to the first optical interface (22a) of the MT- ferrule,
further comprising
- an alignment system (43) adapted to align the MT-ferrule (4) on the optical circuit board (1), wherein the MT-ferrule has a guided surface (50) extending along a mating axis normal to the X-Y plane, and wherein the optical coupling device (8) has a bend-resistant system (48) having a guiding surface (49) complementary to the guided surface (50), and adapted to guide the MT-ferrule along the mating axis.

15. System according to claim 13, wherein the guided surface (50) is an outer surface of the MT-ferrule, and wherein the protection system (51) comprises an inner wall (48) surrounding the outer surface of the ferrule.

## Patentansprüche

1. Optisches System, umfassend:
eine optische Leiterplatte (1) umfassend:
- eine obere Fläche,
- eine untere Fläche (1b; 23), die der oberen Fläche gegenüberliegt,
- mindestens eine optische Schicht (11), die zwischen der oberen und unteren Fläche eingebettet ist und eine erste optische Schnittstelle (1a) aufweist,
- mindestens einen Ausschnitt (27), der in der oberen Fläche ausgebildet ist und eine untere Referenzschicht (20) aufweist, die eine X-Y-Ebene definiert,
- eine optische Kopplungsvorrichtung (8) umfassend:
- mindestens ein Positionierelement (19), das sich in einem der Ausschnitte erstreckt und eine untere Fläche (30) aufweist, die auf der Referenzschicht der optischen Leiterplatte angeordnet ist,
- mindestens einen optischen Pfad, der zum Übertragen von Licht zwischen einer ersten optischen Schnittstelle (25), die optisch mit der ersten optischen Schnittstelle (1a) der optischen Platte gekoppelt ist, und einer zweiten Schnittstelle (26) angepasst ist,
- ein mechanisches Befestigungssystem (31), das angepasst ist, um die optische Kopplungsvorrichtung an der optischen Leiterplatte zu befestigen, und einen Fixierstift (32) aufweist, der sich durch mindestens einen Teil der optischen Leiterplatte (1) an dem Positionierungselement (19) erstreckt,
**dadurch gekennzeichnet, dass** das mechanische Befestigungssystem (31) eine Lagerfläche (35) umfasst, die auf mindestens einer oberen Fläche (8a) der optischen Kopplungsvorrichtung (8) oder auf einer beliebigen unteren Fläche der optischen Leiterplatte (1) liegt; und
wobei die Referenzschicht (20) in einer vorbestimmten Höhe entlang der z-Achse angeordnet ist, und
wobei das Positionierungselement (19) die Referenzschicht (20) bei der vorbestimmten Höhe entlang der z-Achse aufgrund einer Befestigung der Kopplungsvorrichtung (8) an der optischen Leiterplatte (1) durch die Auflagefläche (35) des mechanischen Befestigungssystems (31) kontaktiert.

2. System nach Anspruch 1, wobei das mechanische Befestigungssystem (31) lösbar ist.

3. System nach einem der vorhergehenden Ansprüche, worin das Positionierungselement (19) einen zentralen Bereich aufweist, und wobei sich der Stift in dem zentralen Bereich erstreckt.

4. System nach einem der vorhergehenden Ansprüche, wobei die optische Kopplungsvorrichtung eine obere Fläche (8a) aufweist, die der unteren Fläche gegenüberliegt, und wobei sich der Stift (32) von der oberen Fläche der optischen Kopplungsvorrichtung bis zur unteren Fläche (1b) der optischen Leiterplatte (1) erstreckt.

5. System nach einem der vorhergehenden Ansprüche, wobei das mechanische Befestigungssystem (31) eine Lagerfläche (35) aufweist, die auf der obere Fläche (8a) der optischen Kopplungsvorrichtung aufliegt, die der unteren Fläche (30) des Positionierungselements gegenüberliegt.

6. System nach einem der vorhergehenden Ansprüche, wobei die optische Leiterplatte ein Durchgangsloch (34) aufweist und wobei sich der Stift (32) durch das Durchgangsloch der optischen Leiterplatte erstreckt.

7. System nach einem der vorhergehenden Ansprüche, wobei die optische Kopplungsvorrichtung ein Durchgangsloch (33) aufweist, das sich von der unteren Fläche des Positionierungselements zu einer gegenüberliegenden oberen Fläche (8a) der optischen Kopplungsvorrichtung erstreckt, und wobei sich der Stift durch das Durchgangsloch (33) der optischen Kopplungsvorrichtung erstreckt.

8. System nach einem der vorhergehenden Ansprüche, wobei die optische Leiterplatte ein Durchgangsloch mit einer inneren zylindrischen Fläche (42) umfasst, und wobei der Stift (32) durch Reibung mit der inneren zylindrischen Fläche zusammenwirkt.

9. System nach einem der vorhergehenden Ansprüche, wobei der Stift (32) mit der optischen Kopplungsvorrichtung integral ist.

10. Optisches System nach Anspruch 2, wobei sich der Fixierstift (32) durch die optische Leiterplatte (1) bei dem Positionierungselement (19) erstreckt.

11. System nach einem der vorhergehenden Ansprüche, ferner umfassend:
- eine MT-Hülse (4) mit einer ersten optischen Schnittstelle (22a),
- ein Ausrichtungssystem (43), das angepasst ist, um die MT-Hülse (4) auf der optischen Leiterplatte (1) auszurichten, so dass die erste optische Schnittstelle (22a) der MT-Hülse optisch mit der zweiten optischen Schnittstelle (26) der optischen Kopplungsvorrichtung (8) gekoppelt ist.

12. System nach Anspruch 11, wobei das Ausrichtungssystem zumindest eine Aussparung (47) in der MT-Hülse und zumindest einen entsprechenden Stift (147) umfasst, der mit der Aussparung komplementär ist und integral mit der optischen Kopplungsvorrichtung (8) ausgebildet ist.

13. System nach Anspruch 12, wobei die MT-Hülse eine Führungsfläche (50) aufweist, die sich entlang einer sich senkrecht zur X-Y-Ebene erstreckenden Verbindungsachse erstreckt, und wobei die optische Kopplungsvorrichtung (8) ein biegesteifes System (48) mit einer Führungsfläche (49) aufweist, die zu der Führungsfläche (50) komplementär ist und geeignet ist, die MT-Hülse entlang der Verbindungsachse zu führen.

14. Optisches System nach Anspruch 10, ferner umfassend:
- eine MT-Hülse (4) die eine erste optische Schnittstelle (22a) aufweist, wobei die
- die zweite Schnittstelle (26) optisch mit der ersten optischen Schnittstelle (22a) der MT-Hülse gekoppelt ist,
ferner umfassend
- ein Ausrichtungssystem (43), das angepasst ist, um die MT-Hülse (4) auf der optischen Leiterplatte (1) auszurichten, wobei die MT-Hülse eine Führungsfläche (50) aufweist, die sich entlang einer Verbindungsachse erstreckt, die sich senkrecht zur X-Y-Ebene erstreckt, und wobei die optische Kopplungsvorrichtung (8) ein biegesteifes System (48) mit einer Führungsfläche (49) aufweist, die zu der Führungsfläche (50) komplementär ist, und angepasst ist, um die MT-Hülse entlang der Verbindungsachse zu führen.

15. System nach Anspruch 13, wobei die Führungsfläche (50) eine Außenfläche der MT-Hülse ist, und wobei das Schutzsystem (51) eine Innenwand (48) umfasst, die die Außenfläche der Hülse umgibt.

## Revendications

1. Un système optique comprenant :
- une carte de circuit optique (1) possédant :
• une face supérieure,
• une face inférieure (1b ; 23), à l'opposé de la face supérieure,
• au moins une couche optique (11), enfermée entre les faces supérieure et inférieure, présentant une première interface optique (1a),
• au moins une découpe (27) formée dans la face supérieure, et présentant une couche de référence inférieure (20) définissant un plan X-Y,
- un dispositif de couplage optique (8) possédant :
• au moins un organe de positionnement (19) s'étendant dans l'une desdites découpes, et possédant une face inférieure (30) placée sur la couche de référence de la carte de circuit optique,
• au moins un trajet optique apte à transmettre de la lumière entre une première interface optique (25), optiquement couplée à la première interface optique (1a) de la carte optique, et une seconde interface (26),
- un système de fixation mécanique (31) apte à solidariser le dispositif de couplage optique à la carte de circuit optique, et comprenant une broche de fixation (32) s'étendant au travers d'au moins une partie de la carte de circuit optique (1) au niveau de l'organe de positionnement (19),
**caractérisé en ce que** le système de fixation mécanique (31) comprend une surface de portée (35) portant sur au moins une face supérieure (8a) du dispositif de couplage optique (8) ou sur une quelconque face inférieure de la carte de circuit optique (1) ; et
dans lequel la couche de référence (20) est agencée à une hauteur prédéterminée le long de l'axe z, et
dans lequel l'organe de positionnement (19) vient en contact avec la couche de référence (20) au niveau de la hauteur prédéterminée le long de l'axe z du fait d'une fixation du dispositif de couplage (8) à la carte de circuit optique (1) par la surface de portée (35) du système de fixation mécanique (31).

2. Système selon la revendication 1, dans lequel le système de fixation mécanique (31) est libérable.

3. Système selon l'une des revendications précédentes, dans lequel l'organe de positionnement (19) possède une région centrale, et dans lequel la broche s'étend dans la région centrale.

4. Système selon l'une des revendications précédentes, dans lequel le dispositif de couplage optique possède une face supérieure (8a), à l'opposé de la face inférieure, et dans lequel la broche (32) s'étend depuis la face supérieure du dispositif de couplage optique jusqu'à la face inférieure (1b) de la carte de circuit optique (1).

5. Système selon l'une des revendications précédentes, dans lequel le système de fixation mécanique (31) comprend une surface de portée (35) portant sur la face supérieure (8a) du dispositif de couplage optique, qui est à l'opposé de la face inférieure (30) de l'organe de positionnement.

6. Système selon l'une des revendications précédentes, dans lequel la carte de circuit optique comprend un trou traversant (34) et dans lequel la broche (32) s'étend au travers du trou traversant de la carte de circuit optique.

7. Système selon l'une des revendications précédentes, dans lequel le dispositif de couplage optique comprend un trou traversant (33) s'étendant depuis la face inférieure de l'organe de positionnement jusqu'à une face supérieure opposée (8a) du dispositif de couplage optique, et dans lequel la broche s'étend au travers du trou traversant (33) du dispositif de couplage optique.

8. Système selon l'une des revendications précédentes, dans lequel la carte de circuit optique comprend un trou traversant présentant une face cylindrique interne (42), et dans lequel la broche (32) coopère avec la face cylindrique interne par frottement.

9. Système selon l'une des revendications précédentes, dans lequel la broche (32) est d'une seule pièce avec le dispositif de couplage optique.

10. Système optique selon la revendication 2, dans lequel la broche de fixation (32) s'étend au travers de la carte de circuit optique (1) au niveau de l'organe de positionnement (19).

11. Système selon l'une des revendications précédentes, comprenant en outre :
- une virole MT (4) possédant une première interface optique (22a),
- un système d'alignement (43) apte à aligner la virole MT (4) sur la carte de circuit optique (1), de sorte que la première interface optique (22a) de la virole MT soit optiquement couplée à la seconde interface optique (26) du dispositif de couplage optique (8).

12. Système selon la revendication 11, dans lequel le système d'alignement comprend au moins un creux (47) dans la virole MT, et au moins une broche respective (147), complémentaire du creux et formée d'une seule pièce avec le dispositif de couplage optique (8).

13. Système selon la revendication 12, dans lequel la virole MT possède une surface guidée (50) s'étendant le long d'un axe conjugué perpendiculaire au plan X-Y, et dans lequel le dispositif de couplage optique (8) possède un système résistant à la courbure (48) possédant une surface guidante (49) complémentaire de la surface guidée (50), et apte à guider la virole MT le long de l'axe conjugué.

14. Système optique selon la revendication 10, comprenant en outre :
- une virole MT (4) possédant une première interface optique (22a), dans laquelle
• la seconde interface (26) est optiquement couplée à la première interface optique (22a) de la virole MT,
comprenant en outre :
- un système d'alignement (43) apte à aligner la virole MT (4) sur la carte de circuit optique, la virole MT possédant une surface guidée (50) s'étendant le long d'un axe conjugué perpendiculaire au plan X-Y, et le dispositif de couplage optique (8) possédant un système résistant à la courbure (48) possédant une surface guidante (49) complémentaire de la surface guidée (50), et apte à guider la virole MT le long de l'axe conjugué.

15. Système selon la revendication 13, dans lequel la surface guidée (50) est une surface extérieure de la virole MT, et dans lequel le système de protection (51) comprend une paroi interne (48) entourant la surface externe de la virole.
